# EUROPÄISCHE PATENTSCHRIFT

(11) **EP 2 966 936 B1**
(45) Veröffentlichungstag und Bekanntmachung des Hinweises auf die Patenterteilung: **28.02.2018**
(21) Anmeldenummer: 15171938.2
(22) Anmeldetag: 12.06.2015
(51) Int. Cl.: H05B 6/78, B29C 35/02, H05B 6/64

(54) **VORRICHTUNG ZUR ERWÄRMUNG EINER FUNKTIONSSCHICHT**
DEVICE FOR HEATING A FUNCTIONAL LAYER
DISPOSITIF DE CHAUFFAGE D'UNE COUCHE FONCTIONNELLE

(30) Priorität: 11.07.2014 DE 102014213530
(43) Veröffentlichungstag der Anmeldung: 13.01.2016
(73) Patentinhaber: HOMAG GmbH, 72296 Schopfloch (DE)
(72) Erfinder: Rohde, Domingo, 24111 Kiel (DE)
(74) Vertreter: Grauel, Andreas

(56) Entgegenhaltungen:
- WO-A1-2011/125038
- FR-A1- 2 548 586
- US-A- 4 152 180
- US-A- 4 616 123
- US-A- 5 897 807
- US-A1- 2007 137 633

## Beschreibung

### Technisches Gebiet

Die Erfindung betrifft eine Vorrichtung zur Erwärmung einer Funktionsschicht eines Beschichtungsmaterials, wie einer Oberflächenbeschichtung oder eines Kantenbandes, zum Aufbringen des Beschichtungsmaterials auf eine Fläche eines Werkstücks.

### Stand der Technik

Im Stand der Technik ist es bekannt, auf Werkstücke Beschichtungen aufzubringen. Dabei sind die Werkstücke beispielswiese insbesondere plattenförmige oder dreidimensional aus Holz, Holzwerkstoffen, Kunststoff oder ähnlichem hergestellte Elemente, wie sie beispielsweise im Möbelbau oder bei der Herstellung von Bauelementen, wie beispielsweise Fußbodenelementen, verwendbar sind.

Die Beschichtungen sind dabei flächige Beschichtungen zur Beschichtung von zumindest einer flächigen Breitseite des Werkstücks oder so genannte Kantenbänder zur Beschichtung von zumindest einer Schmalseite des Werkstücks.

Dabei ist es bekannt, dass die Beschichtungen aus einer Oberflächenschicht und einer Funktionsschicht besteht, wobei die Funktionsschicht zum Verbinden der Beschichtung mit dem Werkstück dient. Dazu ist die Funktionsschicht zu aktivieren, damit sie ihre klebenden Eigenschaften annimmt, so dass der Fügeprozess gezielt vorgenommen werden kann.

Im Stand der Technik ist die Aktivierung der Funktionsschicht mittels Laserstrahlen oder mittels heißer Druckluft bekannt. Die Aktivierung mittels Laserstrahlen hat ihre Vorteile in der punktgenauen Applizierung des Laserstrahls zur punktgenau gesteuerten Aktivierung. Die Vorrichtung zur Aktivierung mittels Laserstrahlen hat jedoch den Nachteil, dass die Anwendung ihre Vorteile eher erst bei hohen Stückzahlen zeigt. Auch ist es nachteilig, dass die durch den Laser applizierte Energie nur auf die Oberfläche bzw. in einer vordefinierten geringen Eindringtiefe zwischen nur etwa 1µm und 100µm wirkt und dann mittels Wärmeleitung in die Tiefe der Funktionsschicht weitergeleitet werden muss, um eine gleichmäßige Erwärmung oder Aktivierung der Funktionsschicht zu erreichen.

Auch ist die Aktivierung über heiße Druckluft im Stand der Technik bekannt. Die DE 10 2011 015 898 offenbart eine Vorrichtung zur Erzeugung heißer Druckluft, welche auf ein Kantenband geströmt wird, um die Funktionsschicht zu erwärmen und damit zu aktivieren. Dabei wird eine erhebliche Menge Druckluft auf hohe Temperaturen zu erwärmen sein, um die Funktionsschicht im Durchlauf durch die Vorrichtung zu erwärmen oder zu aktivieren. Solche Vorrichtungen verbrauchen erhebliche Energiemengen, um die benötigten hohen Luftmengen auf über 400°C zu erwärmen, wobei ein großer Teil der Energie aufgrund der Gestaltung der Vorrichtung im Wärmeübertrager über beispielsweise Wärmestrahlung oder ähnliches parasitär abgeführt wird. Auch bewirkt der hochvolumige heiße Luftstrom, dass die Umgebung der Vorrichtung hohen Temperaturen ausgesetzt ist, was einen erheblichen Aufwand an Klimatisierung nach sich zieht. Auch zeigen die Vorrichtungen zur Aktivierung mittels Heißluft einen hohen Geräuschpegel bei der Erzeugung und Ausströmung der unter Druck stehenden Heißluft, was für das Bedienpersonal der Vorrichtung nachteilig ist und einen erheblichen Aufwand für die Geräuschdämmung nach sich zieht. Bei der Nutzung von Heißluft zeigt sich, dass aufgrund der hohen Heißlufttemperaturen die obere Schicht der Funktionsschicht bei einer Temperatur der Heißluft von 400°C bis 500°C stark verflüssigt wird und durch die starke Luftströmung teilweise von der Funktionsschicht abgelöst wird. Diese abgelösten Teile der Funktionsschicht finden sich als Verschmutzungen auf den umliegenden Bauteilen wieder und reduzieren die zur Verklebung verfügbare Klebermenge. Auch ist es nachteilig, dass die durch die Heißluft applizierte Energie nur auf die Oberfläche wirkt und dann mittels Wärmeleitung in die Tiefe der Funktionsschicht weitergeleitet werden muss, um eine durchgängige Erwärmung der Funktionsschicht auf eine Temperatur von im Wesentlichen der Prozesstemperatur oder mehr zu erreichen. Dabei entsteht ein starker Temperaturgradient zwischen der Oberfläche der Funktionsschicht und der Rückseite der Funktionsschicht, die an die Dekorschicht des Beschichtungsmaterials grenzt.

Wird eine Mikrowellenstrahlung für die Erwärmung der Funktionsschicht eingesetzt, so kann eine Erwärmung der Funktionsschicht des Beschichtungsmaterials auch in der Tiefe erfolgen, da die Mikrowellenstrahlung das Material der Funktionsschicht durchdringen kann.

Bei der Verwendung von Mikrowellenstrahlung kann es gegebenenfalls nachteilig sein, wenn die Vorrichtung durch im Betrieb auftretende Verunreinigungen oder durch unsachgemäße Bedienung verschmutzt oder mit Material belastet wird, so dass dieses unbeabsichtigt erwärmt wird.

Die US 5 897 807 offenbart einen Mikrowellenofen welcher mittels eines Förderbands mit Lebensmittel beschickt wird, um die Lebensmittel zu erwärmen.

### Darstellung der Erfindung, Aufgabe, Lösung, Vorteile

Es ist die Aufgabe der Erfindung, eine Vorrichtung zur Erwärmung einer Funktionsschicht eines Beschichtungsmaterials, wie insbesondere einer

Oberflächenbeschichtung oder eines Kantenbandes, insbesondere zum Aufbringen des Beschichtungsmaterials auf eine Fläche eines Werkstücks, zu schaffen, die einfach und unkompliziert und kompakt ausgebildet ist und dennoch hinsichtlich einer unbeabsichtigten Verschmutzung zumindest im nicht aktiven Betriebszustand geschützt ist.

Diese Aufgabe wird mit den Merkmalen von Anspruch 1 gelöst.

Ein Ausführungsbeispiel der Erfindung betrifft eine Vorrichtung zur Erwärmung einer Funktionsschicht eines Beschichtungsmaterials, wie einer Oberflächenbeschichtung oder eines Kantenbandes, insbesondere zum Aufbringen des Beschichtungsmaterials auf eine Fläche eines Werkstücks, mit einer Mikrowellenquelle, einem Applikator und einem Mikrowellenkanal zur Zuführung der in der Mikrowellenquelle erzeugten Mikrowellenstrahlung zu dem Applikator, wobei in dem Applikator ein Mikrowellenfeld aufgrund der zugeführten Mikrowellenstrahlung erzeugbar ist, wobei der Applikator zumindest einen Materialkanal aufweist, welcher den Applikator durchquert und durch welchen das Beschichtungsmaterial durchführbar ist, so dass die Funktionsschicht des Beschichtungsmaterials im Mikrowellenfeld innerhalb des Applikators erwärmt wird, wobei der Materialkanal eine Einlassöffnung und eine Auslassöffnung für das durch den Materialkanal durchzuführende Beschichtungsmaterial aufweist, wobei eine Verschlussvorrichtung vorgesehen ist, mittels welcher die Einlassöffnung und/oder die Auslassöffnung verschließbar ist, wobei dem Applikator eine Andruckvorrichtung nachgeordnet ist, mittels welcher das Beschichtungsmaterial auf das Werkstück appliziert und angepresst wird. Dadurch kann verhindert werden, dass eine Verschmutzung in dem Materialkanal vorliegen kann, die insbesondere von außen eingeführt wird oder eine unsachgemäße Behandlung dazu führt, dass etwas ungewolltes in den Materialkanal eingeführt wird.

Dabei ist es besonders vorteilhaft, wenn die Verschlussvorrichtung zumindest eine Verschlussklappe aufweist zum Öffnen oder Verschließen der Einlassöffnung und/oder der Auslassöffnung. Durch die Verschlussklappe kann in einfacher Weise der Materialkanal gesteuert geschlossen werden.

Besonders vorteilhaft ist es, wenn die Verschlussvorrichtung eine Verschlussklappe zum Öffnen oder Verschließen der Einlassöffnung und eine Verschlussklappe zum Öffnen oder Verschließen der Auslassöffnung aufweist. Dadurch kann der Materialkanal auf beiden Seiten verschlossen werden, was besonders gut gegen Verschmutzung schützt.

Besonders vorteilhaft ist es, wenn eine Steuervorrichtung vorgesehen ist, mittels welcher die Betätigung der Verschlussvorrichtung, wie insbesondere der zumindest einen Verschlussklappe, zum Öffnen oder zum Verschließen der Einlassöffnung und/oder der Auslassöffnung steuerbar ist. Dabei erkennt die Steuereinheit Betriebssituationen, in welchen der Materialkanal zu schützen ist und die Verschlussvorrichtung zu betätigen ist bzw. in welchen der Materialkanal zu öffnen ist, um das Beschichtungsmaterial durch den Materialkanal führen zu können.

Auch ist es vorteilhaft, wenn die Steuervorrichtung die Einlassöffnung und/oder die Auslassöffnung in einem Stand-by-Betrieb oder bei ausgeschalteter Vorrichtung verschließt. So werden beispielsweise Betriebssituationen definiert, in welchen der Materialkanal verschlossen wird.

Erfindungsgemäß ist es zweckmäßig, wenn die Verschlussklappe zwischen einer verschlossenen Stellung und einer geöffneten Stellung verlagerbar ist, wie insbesondere verschiebbar, verschwenkbar oder verdrehbar ist, wobei die Einlassöffnung oder die Auslassöffnung in der verschlossenen Stellung der Verschlussklappe verschlossen ist und in der geöffneten Stellung der Verschlussklappe geöffnet ist. Dadurch kann eine besonders einfache und schnelle Verlagerbarkeit zum Öffnen und Verschließen erreicht werden.

Besonders vorteilhaft ist es, wenn die Verschlussklappe nach dem Typ der Fahnenklappe oder der Schmetterlingsklappe eine Klappenfläche und eine Drehachse aufweist, wobei die Klappenfläche um die Drehachse verschwenkbar ist, wobei die Drehachse in der Ebene der Klappenfläche liegt oder parallel dazu angeordnet ist. So kann eine einfache und bauraumsparende Klappenanordnung erreicht werden, die schnell und einfach betätigbar und ansteuerbar ist.
Besonders vorteilhaft ist es, wenn die Verschlussklappe nach dem Typ der Drehklappe eine Klappenfläche und eine Drehachse aufweist, wobei die Klappenfläche um die Drehachse verschwenkbar ist, wobei die Drehachse senkrecht zur Ebene der Klappenfläche angeordnet ist. Auch so kann eine einfache bauraumsparende Gestaltung erreicht werden, die in der Ebene der zu verschließenden Öffnung verlagerbar angeordnet werden kann.

Auch kann die Verschlussklappe vorteilhaft eine verschiebliche, wie insbesondere linear verschiebliche Klappe sein, welche eine Klappenfläche mit einer Führung aufweist, wobei die Klappenfläche entlang der Führung verschieblich ist. So kann eine Bauweise realisiert werden, die sich sehr nahe an den Materialkanal anschließt und keinen großen Bauraum in lateraler Richtung benötigt.

So ist es vorteilhaft, wenn die Verschlussklappe horizontal oder vertikal verschieblich ist. Dadurch kann je nach Umfeldgestaltung eine günstige Verschiebung realisiert werden.

Auch ist es nach einem erfindungsgemäßen Gedanken vorteilhaft, wenn die Verschlussvorrichtung und/oder die zumindest eine Verschlussklappe einen Positionssensor aufweist, mittels welchem der Verschlusszustand der Einlassöffnung und/oder der Auslassöffnung detektierbar ist oder die Position der Verschlussklappe der Einlassöffnung und/oder der Auslassöffnung detektierbar ist. Dadurch kann eine Fehlstellung der Klappe erkannt werden, so dass entsprechende Maßnahmen zur Behebung der Fehlstellung eingeleitet werden können.

Auch ist es nach einem weiteren erfindungsgemäßen Gedanken vorteilhaft, wenn eine Warnvorrichtung vorgesehen ist, mittels welcher ein Fehlersignal ausgebbar ist, falls die Verschlussvorrichtung und/oder die zumindest eine Verschlussklappe nicht ordnungsgemäß verschließbar oder verschlossen ist. Dadurch kann ein Bediener auf den Sachverhalt der nicht ordnungsgemäßen Positionierung der Klappe aufmerksam gemacht werden, so dass er entsprechende Maßnahmen zur Behebung der Situation einleiten kann.

Auch ist es nach einem weiteren erfindungsgemäßen Gedanken vorteilhaft, wenn eine Überwachungsvorrichtung zur Überwachung des Verschmutzungszustands des Materialkanals vorgesehen ist. Dadurch kann eine Reinigung veranlasst werden oder der Betrieb kann unterbrochen werden, wenn dies zu Problemen führen könnte.

Dabei ist es vorteilhaft, wenn die Überwachungsvorrichtung einen Sensor aufweist, welcher Verunreinigungen im Materialkanal detektiert. Dabei sind Verunreinigungen beispielswiese auch kleine oder kleinste Verunreinigungen, wie beispielsweise Kleberreste, Reste eines Beschichtungsmaterials, Staub etc. oder auf Fehlverhalten zurückzuführende Dinge, wie beispielsweise ein abgelegtes Werkzeug, wie beispielsweise ein Schraubenzieher im Materialkanal. Auch können mehrere solcher Sensoren, auch verschiedene Sensoren, vorgesehen sein.

Besonders vorteilhaft ist es, wenn der Sensor ein wärmeempfindlicher oder infrarotempfindlicher Sensor ist, welcher eine in dem Materialkanal befindliche erwärmte Verschmutzung erkennt.

Besonders vorteilhaft ist es, wenn der Sensor ein rauchempfindlicher Sensor ist, welcher eine Rauchemission einer in dem Materialkanal befindlichen erwärmten Verschmutzung erkennt.

Besonders vorteilhaft ist es, wenn der Sensor ein optischer Sensor ist, welcher eine Abschattung in aufgrund einer im Materialkanal befindlichen Verschmutzung erkennt.

Besonders vorteilhaft ist es, wenn zu dem optischen Sensor eine Lichtquelle vorgesehen ist, welche Licht in den Materialkanal emittiert, um eine Verschmutzung durch Abschattung zu erkennen.

Besonders vorteilhaft ist es, wenn der Sensor ein mikrowellenempfindlicher Sensor ist, welcher eine Mikrowellenleckage detektiert, welche auf eine Verschmutzung im Materialkanal zurückzuführen ist.

Besonders vorteilhaft ist es, wenn der Sensor ein Kamerachip ist, welcher Bilddaten von dem Materialkanal erzeugt, die auswertbar sind.

Besonders vorteilhaft ist es, wenn der Sensor ein Ultraschallsensor ist, mittels welchem eine Verschmutzung im Materialkanal detektierbar ist.

Auch ist es nach einem weiteren erfindungsgemäßen Gedanken vorteilhaft, wenn eine Reinigungsvorrichtung vorgesehen ist, welche gesteuert aktivierbar ist, insbesondere welche aktivierbar ist, wenn erkennbar ist oder wenn erkannt ist, dass im Materialkanal eine Verschmutzung vorliegt.

Auch ist es nach einem weiteren erfindungsgemäßen Gedanken vorteilhaft, wenn der Materialkanal durch den zumindest einen Applikator und/oder durch das zumindest eine Applikatorsegment verläuft, wobei der Kanal eine Einlassöffnung und eine Auslassöffnung aufweist, welche dazu dienen, das Beschichtungsmaterial in den Materialkanal einzulassen und es wieder auszulassen.

Besonders vorteilhaft ist es dabei, wenn der Materialkanal eine umlaufende Wand aufweist, welche den Materialkanal von dem Innenraum des Applikators oder von dem Innenraum des Applikatorsegments trennt.

Auch ist es vorteilhaft, wenn an der Einlassöffnung und/oder an der Auslassöffnung eine Vorrichtung angeordnet ist, welche den einen Austritt von Mikrowellenstrahlung aus der Eintrittsöffnung bzw. aus der Austrittsöffnung reduziert oder verhindert.

Weitere vorteilhafte Ausgestaltungen sind durch die nachfolgende Figurenbeschreibung und durch die Unteransprüche beschrieben.

### Kurze Beschreibung der Figuren der Zeichnung

Nachstehend wird die Erfindung auf der Grundlage zumindest eines Ausführungsbeispiels anhand der Figuren der Zeichnung näher erläutert. Es zeigen:
- Figur 1: eine Ansicht einer erfindungsgemäßen Vorrichtung zur Erwärmung einer Funktionsschicht,
- Figur 2: eine seitliche Ansicht eines Applikators,
- Figur 3: eine Ansicht eines Applikators von oben,
- Figur 4: eine Ansicht eines Applikators von hinten,
- Figur 5: eine Ansicht eines Applikators von vorn,
- Figur 6: eine Ansicht einer Vorrichtung mit einem Ausführungsbeispiel einer Verschlussvorrichtung im geöffneten Zustand,
- Figur 7: eine weitere Ansicht einer Vorrichtung mit einem Ausführungsbeispiel einer Verschlussvorrichtung im geöffneten Zustand,
- Figur 8: eine Ansicht einer Vorrichtung mit einem Ausführungsbeispiel einer Verschlussvorrichtung im geschlossenen Zustand, und
- Figur 9: eine weitere Ansicht einer Vorrichtung mit einem Ausführungsbeispiel einer Verschlussvorrichtung im geschlossenen Zustand.

### Bevorzugte Ausführung der Erfindung

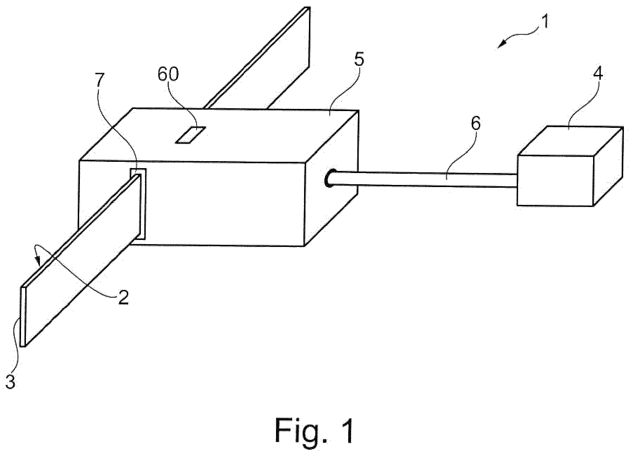

Figur 1 zeigt in einer schematischen Darstellung eine erfindungsgemäße Vorrichtung 1 zur Erwärmung einer Funktionsschicht 2 eines Beschichtungsmaterials 3. Dabei wird der Begriff Erwärmung einer Funktionsschicht auch als Aktivierung eine Funktionsschicht verstanden. Diese Begriffe werden im Weiteren als gleichwertig bzw. gleichbedeutend verwendet. Die Figur 1 zeigt die Funktionsschicht auf einer Seite des Beschichtungsmaterials. Sie kann jedoch auch auf der anderen Seite des Beschichtungsmaterials angeordnet sein.

Dabei ist das Beschichtungsmaterial insbesondere ein Kantenband, welches auf ein Werkstück an einer Schmalseite aufbringbar ist oder insbesondere ein eher flächiges Beschichtungsmaterial, welches auch auf eine eher flächige Breitseite eines Werkstücks aufbringbar ist.

Die Erwärmung oder Aktivierung der Funktionsschicht 2 dient dem Aufbringen und insbesondere dem dauerhaften Befestigen des Beschichtungsmaterials 3 auf einer Fläche des Werkstücks. Dabei wird die Funktionsschicht derart aktiviert, dass sie eine Art Kleber bildet oder bewirkt, mittels weichem das Beschichtungsmaterial auf der Fläche des Werkstücks verklebbar ist.

Die Vorrichtung 1 weist eine Mikrowellenquelle 4 und einen Applikator 5 auf, wobei die Mikrowellenstrahlung mittels eines Mikrowellenkanals 6 von der Mikrowellenquelle 4 zum Applikator 5 übertragen wird. Der Mikrowellenkanal 6, welcher bevorzugt als Hohlleiter oder als Koaxialkabel ausgebildet ist, dient der Zuführung der in der Mikrowellenquelle 4 erzeugten Mikrowellenstrahlung zu dem Applikator 5. In dem Applikator 5 wird dadurch ein Mikrowellenfeld erzeugt, welches von dem Beschichtungsmaterial 3 durchlaufen wird.

Der Applikator 5 weist dazu zumindest einen Materialkanal 7 auf, welcher das Mikrowellenfeld quert, und durch welchen das Beschichtungsmaterial geführt wird.

Das Mikrowellenfeld ist dabei derart ausgebildet oder ansteuerbar, dass beim Durchlaufen des Beschichtungsmaterials durch das Mikrowellenfeld, die Funktionsschicht des Beschichtungsmaterials erwärmt oder aktiviert wird.

Das Beschichtungsmaterial besteht dabei zumindest aus zwei Schichten, wovon eine Schicht die Funktionsschicht ist, welche erwärmt bzw. aktiviert wird, wobei die zumindest eine andere Schicht, welche im Nachfolgenden als Dekorschicht bezeichnet wird, möglichst nicht oder nicht so stark erwärmt wird.

Die Funktionsschicht und die Dekorschicht können jeweils auch aus einem entsprechenden eigenen Schichtaufbau aus mehreren einzelnen Schichten bestehen. So können die Funktionsschicht und/oder die Dekorschicht des Beschichtungsmaterials aus zumindest einer Schicht oder aus einer Mehrzahl von Schichten bestehen.

Die Funktionsschicht und die Dekorschicht weisen jeweils einen Verlustfaktor ε"_{eff} auf, welcher als Verlustfaktor des jeweiligen Materials der Funktionsschicht und der Dekorschicht betrachtet wird. Dabei ist der Verlustfaktor der Imaginärteil der komplexen relativen Dielektrizitätskonstante des jeweiligen Materials.

Dabei wird der Verlustfaktor ε"_{eff} (FS) der Funktionsschicht oder der Verlustfaktor ε"_{eff} (DS) der Dekorschicht für Frequenzen (ISM) bei 915MHz, 2,45 GHz oder 5,8 GHz angegeben.

Das Verhältnis R = ε"_{eff} (FS) / ε"_{eff} (DS) bei einer der angegebenen Frequenzen von 915MHz, 2,45 GHz oder 5,8 GHz definiert das Verhältnis der Verlustfaktoren.

Dabei ist das Beschichtungsmaterial derart spezifiziert, dass R > 1, vorzugsweise R > 10 gilt. Dies bewirkt, dass sich die Funktionsschicht FS wesentlich stärker erwärmt als die Dekorschicht des Beschichtungsmaterials, so dass es zu einer selektiven Erwärmung des Beschichtungsmaterials kommt, insbesondere bei einer Anwendung von Mikrowellenapplikatoren bei den ISM-Frequenzen von 915MHz oder 2,45GHz oder 5,8GHz.

Insbesondere bei einer Einstellung des Applikators als Applikator mit einer laufenden Welle ist R > 1 und ε"_{eff} (FS) >1. Bei einem resonanten Applikator ist R > 1 und ε"_{eff} (FS) < 50.

Dabei ist der Applikator von der Mikrowellenquelle mit Mikrowellenstrahlung einer Leistung von 0,1 kW bis etwa 50kW beaufschlagt. Daraus resultiert je nach Verlustfaktor des jeweiligen Materials eine Erwärmung des jeweiligen Materials der Funktionsschicht bzw. der Dekorschicht. Die Erwärmung der Funktionsschicht ist dabei größer als die Erwärmung der Dekorschicht, so dass die Dekorschicht nicht oder gegebenenfalls nur geringfügig erwärmt wird, während die Funktionsschicht auf Prozesstemperatur erwärmt wird.

Werden mehrere Applikatoren verwendet, so kann jeder Applikator von der gleichen Mikrowellenquelle gespeist werden oder alternativ kann jeder Applikator von einer separaten Mikrowellenquelle gespeist werden. Auch können Gruppen von Applikatoren oder von Applikatorsegmenten von einer Mikrowellenquelle gespeist werden oder von einer Mehrzahl von Mikrowellenquellen gespeist werden.

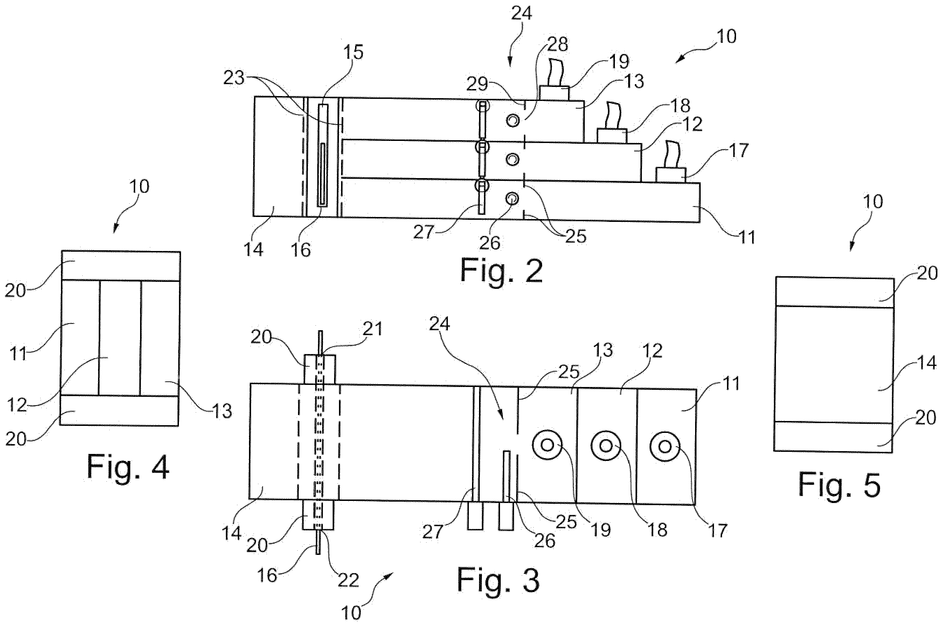

Die Figuren 2 bis 5 zeigen jeweils verschiedene Ansichten eines erfindungsgemäßen Applikators 10 in einer ersten Betriebsstellung. Die Figur 2 zeigt den Applikator in einer Seitenansicht, die Figur 3 in einer Draufsicht von oben, die Figur 4 in einer hinteren Ansicht und die Figur 5 in einer vorderen Ansicht.

Der Applikator 10 weist drei Applikatorsegmente 11, 12, 13 auf, die übereinander angeordnet sind. Die Applikatorsegmente 11, 12, 13 sind Hohlräume, in welche eingangsseitig die Mikrowellenstrahlung eingespeist wird und die in eine Kammer 14 münden, in welcher der Materialkanal 15 vorgesehen ist, welcher einen Kanal bildet, um das Beschichtungsmaterial durch die Kammer 14 führen zu können. In der Kammer 14 bildet sich eine laufende oder eine stehende Welle der Mikrowellenstrahlung aus und kann bei der Durchführung des Beschichtungsmaterials 16 dieses je nach Verlustfaktor erwärmen oder aktivieren.

Die Applikatorsegmente 11,12, 13 sind dabei übereinander angeordnet und am hinteren Ende abgestuft ausgebildet, so dass der Anschluss eines Mikrowellenkanals 17, 18, 19 auf einer Oberseite des jeweiligen Applikatorsegments 11, 12, 13 möglich ist. Der Mikrowellenkanal 17, 18, 19 ist dabei bevorzugt ein Hohlleiter und/oder ein Koaxialkabel. Dabei kann es vorteilhaft sein, wenn ein Hohlleiter verwendet wird, der in Segmente unterteilt ist.

Seitlich des Materialkanals 15 ist dieser beidseitig mit einer Vorrichtung 20 als Drossel versehen, welche das Austreten der Mikrowellenstrahlung abschwächt oder gänzlich abschirmt. Der Materialkanal 15 ist dabei derart ausgebildet, dass er durch den zumindest einen Applikator 10 und/oder durch das zumindest eine Applikatorsegment 11, 12, 13 verläuft, wobei der Materialkanal 15 eine Einlassöffnung 21 und eine Auslassöffnung 22 aufweist, welche dazu dienen, das Beschichtungsmaterial 16 in den Materialkanal 15 einzulassen und es wieder auszulassen. Der Materialkanal 15 weist dazu eine umlaufende Wand 23 auf, welche den Materialkanal 15 von dem Innenraum 14 des Applikators 10 oder von dem Innenraum des jeweiligen Applikatorsegments 11, 12, 13 trennt.

Die Figuren 2 bis 5 zeigen einen Applikator 10 mit drei Applikatorsegmenten 11 bis 13. Alternativ können auch mehrere Applikatoren oder ein oder mehrere Applikatoren vorgesehen sein mit einem oder mehreren Applikatorsegmenten. Dabei kann es vorteilhaft sein, wenn zumindest ein Applikator 10 oder alle Applikatoren ein Applikatorsegment 11, 12, 13 oder eine Mehrzahl von Applikatorsegmente 11, 12, 13 aufweisen. So kann die Mikrowellenstrahlung auf die jeweiligen Applikatoren oder auf die jeweiligen Applikatorsegmente verteilt werden, so dass die Erwärmung des Beschichtungsmaterials im Materialkanal an die Bedürfnisse angepasst werden kann.

Dabei kann die Verteilung der Mikrowellenstrahlung beispielsweise über die Höhe des Beschichtungsmaterials veränderlich sein. Beispielsweise kann der obere und/oder der untere Rand des Beschichtungsmaterials stärker oder weniger stark erwärmt werden als ein mittlerer Bereich.

Die Figuren zeigen einen Applikator mit einem Materialkanal, der durch den Applikator führt, durch welchen das Beschichtungsmaterial durchgeführt wird. Erfindungsgemäß kann durch den zumindest einen Applikator auch eine Mehrzahl von Materialkanäle geführt sein, die hintereinander und/oder übereinander angeordnet sein können. Dadurch können gleichzeitig mehrere Bänder, Streifen oder Bahnen von Beschichtungsmaterial erwärmt werden. Dies mag bei einer Vorrichtung vorteilhaft sein, bei der gleichzeitig mehrere solcher erwärmter Beschichtungsmaterialien verarbeitet werden. So können gleichzeitig mehrere Werkstücke beschichtet werden oder es kann ein Werkstück an mehreren Seiten beschichtet werden.

In Figur 2 oder 3 ist weiterhin zu erkennen, dass im Applikator bzw. in den Applikatorsegmenten 11, 12, 13 jeweils eine Blende 24 vorgesehen ist. Diese Blende dient dazu, die Form der Resonanzkurve des Applikators bzw. des Applikatorsegments einzustellen. Wenn die Blende 24 größer gestellt wird, verschiebt sich die Charakteristik des Applikators bzw. des Applikatorsegments von einem resonanten System mit stehender Welle zu einem System mit laufender Welle. Die Blende 24 besteht dabei bevorzugt aus einer Art Lochblende 25, welche in ihrem Durchlassquerschnitt veränderlich ist und/oder aus einem veränderlichen Metallelement 26, wie beispielsweise einem metallischen Dorn, welcher der gezielten Beeinflussung der Mikrowellenstrahlung dient.

Sowohl die Lochblende 25 als auch das Metallelement 26 ist/sind dabei bevorzugt verstellbar ausgebildet, um die Charakteristik des Applikators 10 oder des Applikatorsegments 11, 12, 13 auf die jeweiligen Anforderungen einstellen zu können.

Die Blende 24 ist, wie es die Figur 2 zeigt, zwischen der Mikrowellenquelle und dem Applikator oder dem Applikatorsegment oder in dem Applikator oder in dem Applikatorsegment angeordnet. Sie ist bevorzugt der Modulationsvorrichtung 27 vorgeschaltet. Alternativ könnte sie jedoch auch der Modulationsvorrichtung nachgeordnet sein.

Die Blende 24 als Lochblende 25 weist dabei eine Öffnung 28 auf, insbesondere eine Öffnung 28 in einer Metallwandung 29. Dabei ist bevorzugt der Öffnungsquerschnitt der Öffnung 28 der Blende veränderlich einstellbar.

Auch das als Blende wirkende Metallelement 26, welches in die Öffnung des Applikatorsegments ragt, ist bevorzugt einstellbar. Dabei kann der Grad des Hineinragens, also die Eindringtiefe des Metallelements in die Öffnung, einstellbar sein.

Das Metallelement 26 ist bevorzugt der Lochblende 25 nachgeordnet. Alternativ könnte es jedoch auch der Lochblende 25 vorgeschaltet sein.
Dabei kann ein Metallelement angeordnet sein oder es können alternativ auch mehrere Metallelemente angeordnet sein. Das Metallelement oder die Metallelemente können vorteilhaft innerhalb und/oder außerhalb des Applikators angeordnet sein.

Erfindungsgemäß ist das Metallelement ein Metallbolzen, der in das Applikatorsegment hineinragt.

Weiterhin ist in den Figuren 2 und 3 zu erkennen, dass in zumindest einem Applikator 10 und/oder in zumindest einem Applikatorsegment 11, 12, 13 eine Modulationsvorrichtung 27 zur Einstellung der Modulation der Mikrowellenstrahlung vorgesehen ist. Die Modulationsvorrichtung 27 ist dabei als Art Klappe ausgebildet, welche die Mikrowellenstrahlung derart beeinflusst, dass sie die Resonanzfrequenz des Resonators des Applikators bzw. des Applikatorsegments 11, 12, 13 an die Resonanzfrequenz des Magnetrons, also der Mikrowellenquelle, anpasst.

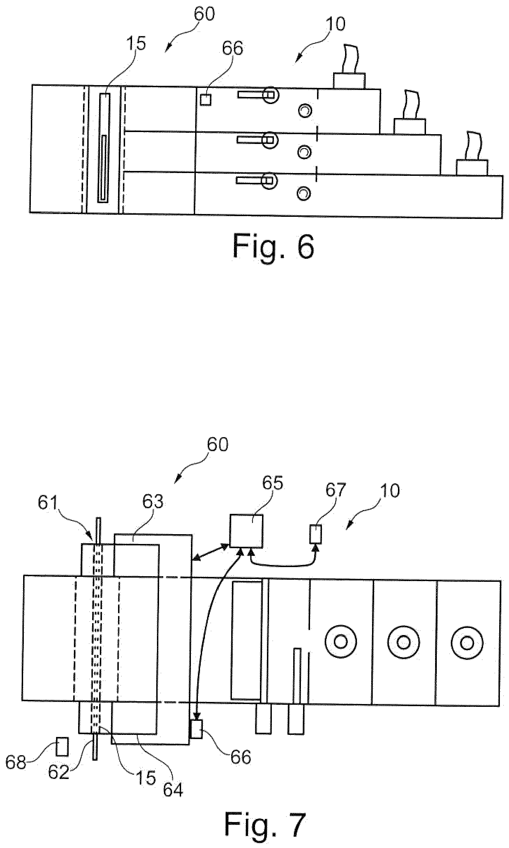

In den Figuren 2 und 3 ist die Modulationsvorrichtung 27 als Art Klappe ausgebildet. Diese Modulationsvorrichtung 27 ist in den Figuren 2 und 3 nach unten eingestellt. In den Figuren 6 und 7 ist die Modulationsvorrichtung 27 nach oben geklappt eingestellt.

In den Figuren 2 und 3 ist der zumindest eine Materialkanal 15 in dem Applikator 10 oder alternativ auch in dem Applikatorsegment feststehend angeordnet, wobei das Mikrowellenfeld veränderlich in dem Applikator10 und/oder in dem Applikatorsegment einstellbar ist

Alternativ dazu kann der zumindest eine Materialkanal 15 in dem Applikator 10 oder in dem Applikatorsegment auch verlagerbar einstellbar sein, um das Beschichtungsmaterial in dem Mikrowellenfeld einstellen zu können. Dabei ist der Materialkanal und/oder das Mikrowellenfeld derart einstellbar, dass eine Funktionsschicht des Beschichtungsmaterials in einem Bereich maximaler elektrischer Feldstärke anordenbar oder in diesem Bereich durchführbar ist.

Das Beschichtungsmaterial wird dabei mittels eines Antriebs durch den Materialkanal geführt. Dabei kann der Antrieb an dem Applikator angebracht oder diesem zugeordnet sein. Alternativ kann der Antrieb auch ein Antrieb einer Vorrichtung sein, die das Beschichtungsmaterial auf das Werkstück aufbringt. So kann der Antrieb Teil einer Kantenverleimvorrichtung sein, wenn das Beschichtungsmaterial beispielsweise eine Kante ist, die auf die Schmalseite eines Werkstücks aufgebracht werden kann.

In den Figuren 2 und 3 sind die Applikatorsegmente 11, 12, 13 in der Höhe gleich ausgebildet. Alternativ kann ein Applikator 10 auch in mehrere Applikatorsegmente 11, 12, 13 unterteilt sein, wobei die Applikatorsegmente 11, 12, 13 auch unterschiedliche geometrische Abmessungen bzw. Höhen aufweisen können. Dabei kann ein Applikator in mehrere Applikatorsegmente unterteilt sein, wobei sich zumindest einzelne der Applikatorsegmente in der Höhe und/oder in der Breite unterscheiden können. Dadurch kann der Energieeintrag in das Beschichtungsmaterial als Funktion der Höhe bzw. Breite moduliert werden.

Zur Modulation der Erwärmung bzw. der Aktivierung des Beschichtungsmaterials kann es auch vorteilhaft sein, wenn der Applikator oder die Applikatoren oder das Applikatorsegment oder die Applikatorsegmente austauschbar sind. So können die Applikatoren oder die Applikatorsegmente in verschiedenen Höhen oder Breiten eingesetzt werden, um an das Beschichtungsmaterial angepasst zu sein.

Der Materialkanal 15 ist als durchgehender Spalt mit einer umlaufenden Wand 23 ausgebildet. Dabei ist der Materialkanal 15 aus einem Material hergestellt, welches zumindest eines der folgenden Materialien ist oder eines der Materialien aufweist: PTFE, Keramik, Glas, technisches Glas, und/oder Quarzglas. Dabei kann der Materialkanal 15 beispielsweise aus PTFE, wie Teflon, hergestellt sein und als PTFE-Block in den Applikator 10 eingesetzt sein.

Auch kann der Materialkanal 15 innen mit einem Material beschichtet sein, welches eines der folgenden Materialien ist oder eines der Materialien aufweist: PTFE, Keramik, Glas, technisches Glas und/oder Quarzglas.

Auch kann der Applikator 10 oder die Applikatoren oder das Applikatorsegment oder die Applikatorsegmente 11, 12, 13 innen mit einem Material beschichtet oder ausgefüllt sein, welches eines der folgenden Materialen ist oder eines der Materialien aufweist: PTFE, Keramik, Glas, technisches Glas, und/oder Quarzglas.

Auch kann eine Führungsvorrichtung im Materialspalt 15 vorgesehen sein, welche als Führungsschienen ausgebildet sind und unten und oben in dem Materialspalt 15 angeordnet sind. Dabei durchqueren die Führungsschienen den Materialspalt 15, so dass das Beschichtungsmaterial auf seinem Weg durch den Materialspalt geführt ist. Die beiden Führungsschienen oder im Allgemeinen die Führungsvorrichtung ist auf die Höhe bzw. Breite des Beschichtungsmaterials einstellbar, so dass auch unterschiedlich hohe oder breite Beschichtungsmaterialien, wie beispielsweise Bänder durch den Materialspalt führbar sind. Die Führungsvorrichtung dient der Führung des Beschichtungsmaterials und hat weiterhin den Vorteil, dass in dem Bereich, in welchem das Beschichtungsmaterial in die Führungsvorrichtung eingreift, die Erwärmung nicht so hoch ist als in einem mittleren Bereich. Damit wird erreicht, dass der Randbereich des Beschichtungsmaterials die Funktionsschicht stärker verkleben kann. Dabei ist der Bereich etwa 0,5 bis 4 mm breit, in welchem das Beschichtungsmaterial in die Führungsvorrichtung eingreift.

Die Führungsvorrichtung kann dabei auch federnd gelagert sein, wie insbesondere die Führungsschienen, um ein Verklemmen des Beschichtungsmaterials zu vermeiden.

Auch kann die Führungsvorrichtung, wie die obere und/oder die untere Führungsschiene an eine Spülvorrichtung angeschlossen und mit Kanälen versehen sein, um mit einem Spülmedium, wie Luft, gespült zu werden. So kann auf das Beschichtungsmaterial in seitlicher Richtung und/oder direkt von oben oder unten das Spülmedium beaufschlagt werden, um eine Überhitzung in der Führungsschiene zu vermeiden. Hierzu weisen die Führungsschienen bevorzugt in der unteren Fläche und/oder in der oberen Fläche sowie in den seitlichen Flächen Kanäle auf, durch welche das Spülmedium geleitet werden kann.

Weiterhin vorteilhaft ist ein Applikator 10 mit einem Materialspalt 15 mit einer Spülvorrichtung. Die Spülvorrichtung umfasst einen ersten Spülmediumanschluss und einen zweiten Spülmediumanschluss, wobei der erste Spülmediumanschluss und der zweite Spülmediumanschluss dazu dienen, ein Spülmedium anzuschließen. Dieses Spülmedium, wie beispielsweise Luft, wird von den Spülmediumanschlüssen in Kanäle geleitet, die sich verteilen und im Materialkanal 15 münden, um den Materialkanal 15 und das Beschichtungsmaterial 16 im Materialkanal 15 zu spülen. Die Spülvorrichtung ist ein optionales Merkmal, das mit den Merkmalen der anderen Ausführungsbeispiele nutzbar ist.

In einem Endbereich des Applikators 10 ist es vorteilhaft, wenn eine Füllung vorgesehen ist, um die dielektrischen Eigenschaften des Resonators zu beeinflussen. Dadurch kann der Resonator und der Applikator 10 im Ganzen kleiner ausgeführt werden, da die Füllung das Mikrowellenfeld derart ändert, dass eine kleinere Baulänge bei geeigneter Füllung ausreichend ist. Die Füllung ist ein optionales Merkmal, das mit den Merkmalen der anderen Ausführungsbeispiele nutzbar ist.

Besonders bevorzugt ist eine Temperaturmessvorrichtung vorgesehen, welche die Überwachung der Temperatur des Beschichtungsmaterials 16 im Materialkanal 15 und/oder am Eingang und/oder am Ausgang des Materialkanals 15 ermöglicht. Dadurch kann eine Rückkopplung zur Steuerung der Mikrowellenenergie und/oder der Resonanzfrequenz des Applikators oder der Gestalt des Mikrowellenfelds erfolgen. Dazu kann eine Mehrzahl von Temperatursensoren angeordnet sein, welche die Temperatur des Beschichtungsmaterials detektieren. Die Anzahl der Temperatursensoren kann dabei 1 bis 20 oder mehr sein. Dabei ist es besonders vorteilhaft, wenn eine kontinuierliche Messung der Temperatur der Funktionsschicht des Beschichtungsmaterials vorgenommen wird.

Damit kann beispielsweise eine Steuerung oder eine Regelung der Temperatur der Funktionsschicht als Funktion der Ausgangsleistung der Mikrowellenquelle vorgenommen werden.

Dabei kann beispielsweise der Sollwert der Temperatur der Funktionsschicht über die Länge des Kantenbandes konstant gehalten werden. Alternativ ist es zweckmäßig, wenn der Sollwert der Temperatur des Beschichtungsmaterials variiert werden kann, wobei die Variation entsprechend eines anwenderspezifischen Profils vorgenommen werden kann.

Die erfindungsgemäße Vorrichtung dient der Erwärmung oder Aktivierung eines Beschichtungsmaterials. Dabei kann der Erwärmungsprozess mittels des Mikrowellenapplikators mit anderen Heizvorrichtungen oder Heizmethoden kombiniert werden. Dabei können diese weiteren Heizvorrichtungen zur Vorwärmung und/oder zur Erreichung bzw. zum Halten der Prozesstemperatur der Funktionsschicht eingesetzt werden. Dabei kann das zu erreichende Temperaturprofil des Beschichtungsmaterials in Prozessrichtung und senkrecht zur Prozessrichtung durch die Kombination der Heizprofile der einzelnen Heizvorrichtungen erzielt werden. Zur Vorwärmung wird die Heizvorrichtung bezogen auf die Vorschubrichtung des Beschichtungsmaterials vor der Mikrowellenheizvorrichtung angeordnet. Dazu sind folgende Heizvorrichtungen geeignet: die direkte Erwärmung der Funktionsschicht über mechanischen Kontakt mit geheizten mechanischen Bauteilen, Heißluft, IR-, VIS-, oder UV-Lampen, LED- oder Laservorrichtungen oder Ultraschall. Zur Erreichung bzw. zum Halten der Prozesstemperatur der Funktionsschicht wird die zusätzliche Heizvorrichtung bezogen auf die Vorschubrichtung des Beschichtungsmaterials nach der Mikrowellenheizvorrichtung angeordnet. Hierzu sind folgende Energiequellen vorteilhaft: Heißluft, IR-, VIS-, oder UV-Lampen, LED- oder Laservorrichtungen oder Ultraschall.

Die gezeigten Applikatoren können einzeln oder in Gruppen verwendet werden. Auch können die Applikatoren einzelne Applikatorsegmente oder Gruppen davon aufweisen. Dabei können sich die Applikatorsegmente eines Applikators in der Höhe unterscheiden, um eine optimale Erwärmung von verschieden hohen Beschichtungsmaterialien, beispielsweise als Bänder, erreichen zu können. Die Anzahl der Applikatoren liegt vorzugsweise zwischen 1 und 20 oder mehr. Die Anzahl der Applikatorsegmente liegt vorzugsweise zwischen 1 und 20 oder mehr.

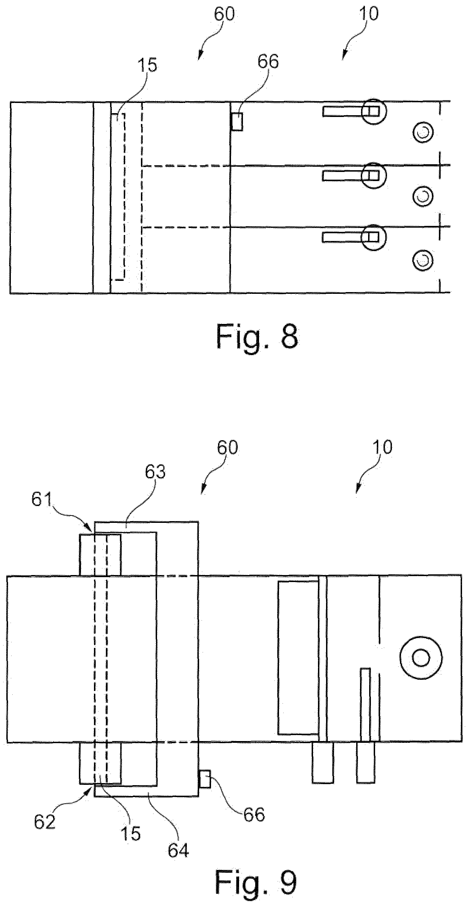

Die Figuren 6 bis 9 zeigen einen Applikator 10 mit einer Verschlussvorrichtung 60. Die Verschlussvorrichtung 60 dient dazu, die Eingangsöffnung 61 und die Ausgangsöffnung 62 in Betriebssituationen abzuschließen, in welchen sie nicht geöffnet sein müssen und diese Öffnungen zu öffnen, wenn es die Betriebssituation verlangt. So können die Öffnungen geöffnet werden, wenn ein Beschichtungsmaterial durch den Materialspalt 15 durchgeführt werden soll.

Dazu weist die Verschlussvorrichtung 60 zumindest eine Verschlussklappe 63, 64 auf, zum Öffnen oder Verschließen der Einlassöffnung 61 und/oder der Auslassöffnung 62. Im Ausführungsbeispiel der Figuren 6 bis 9 sind dazu zwei Klappen 63, 64 vorgesehen, jeweils eine Klappe 63, 64 für eine der Öffnungen 61, 62.

Weiterhin ist eine Steuervorrichtung 65 vorgesehen, mittels welcher die Betätigung der Verschlussvorrichtung 60, wie insbesondere der zumindest einen Verschlussklappe 63, 64, zum Öffnen oder zum Verschließen der Einlassöffnung und/oder der Auslassöffnung vorgenommen wird. Auch sind Antriebsmittel vorgesehen, mittels welchen die zumindest eine Klappe verlagerbar ist, um die Öffnungen 61, 62 zu öffnen oder zu schließen.

Dabei steuert die Steuervorrichtung 65 die Verschlussvorrichtung 60 derart, dass die Einlassöffnung 61 und/oder die Auslassöffnung 62 in einem Stand-by-Betrieb oder bei ausgeschalteter Vorrichtung 1 verschließt.

In den Figuren 6 bis 9 ist zu erkennen, dass die Verschlussklappen 63, 64 zwischen einer verschlossenen Stellung und einer geöffneten Stellung verlagerbar sind. Dabei ist das Ausführungsbeispiel der Figuren 6 bis 9 derart, dass die Verschlussklappen 63, 64 verschiebbar ausgebildet sind. Alternativ dazu können die Verschlussklappen auch verschwenkbar oder verdrehbar sein, wobei die Einlassöffnung 61 oder die Auslassöffnung 62 in der verschlossenen Stellung der Verschlussklappe 63, 64 verschlossen ist und in der geöffneten Stellung der Verschlussklappe 63, 64 geöffnet ist.

Dazu können die Verschlussklappen nach dem Typ der Fahnenklappe oder der Schmetterlingsklappe eine Klappenfläche und eine Drehachse aufweisen, wobei die Klappenfläche um die Drehachse verschwenkbar ist, wobei die Drehachse in der Ebene der Klappenfläche liegt oder parallel dazu angeordnet ist.

Alternativ dazu kann die Verschlussklappe nach dem Typ der Drehklappe eine Klappenfläche und eine Drehachse aufweisen, wobei die Klappenfläche um die Drehachse verschwenkbar ist, wobei die Drehachse senkrecht zur Ebene der Klappenfläche angeordnet ist.

Die gezeigte Verschlussklappe 63, 64 ist eine verschiebliche, wie insbesondere linear verschiebliche Klappe, welche eine Klappenfläche mit einer Führung aufweist, wobei die Klappenfläche entlang der Führung verschieblich ist. Gemäß der Figuren 6 bis 9 sind die Verschlussklappen 63, 64 horizontal verschieblich angeordnet. Alternativ dazu könnten die Klappen auch vertikal verschieblich gestaltet sein.

Dabei ist es für die Steuerung der Verschlussvorrichtung 60 zweckmäßig, wenn die Verschlussvorrichtung 60 und/oder die zumindest eine Verschlussklappe 63, 64 einen Positionssensor 66 aufweist, mittels welchem der Verschlusszustand der Einlassöffnung 61 und/oder der Auslassöffnung 62 detektierbar ist oder die Position der Verschlussklappe 63, 64 der Einlassöffnung 61 und/oder der Auslassöffnung 62 detektierbar ist. Der Positionssensor 66 steht dabei mit der Steuereinheit 65 in Signalverbindung. Dabei kann auch ein Fehlersignal ausgegeben werden, wenn der Positionssensor erkennt, dass die Verschlussklappen nicht vollständig geöffnet oder vollständig geschlossen sind, je nach dem, welche Position die Verschlussklappen einnehmen sollen.

Dabei ist es auch vorteilhaft, wenn eine Warnvorrichtung 67 vorgesehen ist, mittels welcher ein Fehlersignal ausgebbar ist, falls die Verschlussvorrichtung 60 und/oder die zumindest eine Verschlussklappe 63, 64 nicht ordnungsgemäß verschließbar oder verschlossen ist. Als Warnvorrichtung kann ein optisches und/oder ein akustisches Warmsignal ausgegeben werden.

Optional ist es auch vorteilhaft, wenn eine Überwachungsvorrichtung 68 zur Überwachung des Verschmutzungszustands des Materialkanals 15 vorgesehen ist. Die Überwachungsvorrichtung 68 weist dazu einen Sensor auf, welcher Verunreinigungen im Materialkanal 15 detektiert. Dabei kann der Sensor ein wärmeempfindlicher oder infrarotempfindlicher Sensor sein, welcher eine in dem Materialkanal 15 befindliche erwärmte Verschmutzung erkennt. Auch kann der Sensor ein rauchempfindlicher Sensor sein, welcher eine Rauchemission einer in dem Materialkanal 15 befindlichen erwärmten Verschmutzung erkennt. Auch kann der Sensor ein optischer Sensor sein, welcher eine Abschattung in aufgrund einer im Materialkanal befindlichen Verschmutzung erkennt. Zu dem optischen Sensor kann auch eine Lichtquelle vorgesehen sein, welche Licht in den Materialkanal emittiert, um eine Verschmutzung durch Abschattung zu erkennen. Dazu ist der Sensor und die Lichtquelle an gegenüberliegenden Öffnungen des Materialkanals angeordnet.

Auch ist es alternativ zweckmäßig, wenn der Sensor ein mikrowellenempfindlicher Sensor ist, welcher eine Mikrowellenleckage detektiert, welche auf eine Verschmutzung im Materialkanal zurückzuführen ist.

Alternativ kann der Sensor ein Kamerachip sein, welcher Bilddaten von dem Materialkanal erzeugt, die auswertbar sind. Dazu kann die Steuereinheit die aktuellen Bilddaten mit zuvor aufgenommenen Referenzbilddaten vergleichen, um eine Verschmutzung zu erkennen.

Auch kann der Sensor ein Ultraschallsensor sein, mittels welchem eine Verschmutzung im Materialkanal detektierbar ist. Dabei kann das aktuelle Ultraschallsignal ebenso mit einem Referenzsignal verglichen werden, um eine Verschmutzung zu erkennen.

Gemäß der Erfindung kann einer der oben genannten Sensoren vorgesehen sein oder es können auch mehrere der oben genannten Sensoren vorgesehen sein.

Besonders vorteilhaft ist es, wenn eine Reinigungsvorrichtung vorgesehen ist, welche gesteuert aktivierbar ist, insbesondere welche aktivierbar ist, wenn erkennbar ist, dass im Materialkanal eine Verschmutzung vorliegt.

## Patentansprüche

1. Vorrichtung (1) zur Erwärmung einer Funktionsschicht (2) eines Beschichtungsmaterials (3), wie einer Oberflächenbeschichtung oder eines Kantenbandes, zum Aufbringen des Beschichtungsmaterials (3) auf eine Fläche eines Werkstücks, mit einer Mikrowellenquelle (4), einem Applikator (5,10) und einem Mikrowellenkanal (6) zur Zuführung der in der Mikrowellenquelle erzeugten Mikrowellenstrahlung zu dem Applikator (5,10), wobei in dem Applikator (5,10) ein Mikrowellenfeld aufgrund der zugeführten Mikrowellenstrahlung erzeugbar ist, wobei der Applikator (5,10) zumindest einen Materialkanal (7) aufweist, welcher den Applikator (5,10) durchquert und durch welchen das Beschichtungsmaterial (3) durchführbar ist, so dass die Funktionsschicht (2) des Beschichtungsmaterials (3) im Mikrowellenfeld innerhalb des Applikators (5,10) erwärmt wird, wobei der Materialkanal (7) eine Einlassöffnung (61) und eine Auslassöffnung (62) für das durch den Materialkanal (7) durchzuführende Beschichtungsmaterial (3) aufweist, wobei eine Verschlussvorrichtung (60) vorgesehen ist, mittels welcher die Einlassöffnung (61) und/oder die Auslassöffnung (62) verschließbar ist, wobei dem Applikator eine Andruckvorrichtung nachgeordnet ist, mittels welcher das Beschichtungsmaterial auf das Werkstück appliziert und angepresst wird.

2. Vorrichtung (1) nach Anspruch 1, **dadurch gekennzeichnet, dass** die Verschlussvorrichtung (60) zumindest eine Verschlussklappe (63) aufweist zum Öffnen oder Verschließen der Einlassöffnung (61) und/oder der Auslassöffnung (62).

3. Vorrichtung (1) nach Anspruch 1 oder 2, **dadurch gekennzeichnet, dass** die Verschlussvorrichtung (60) eine Verschlussklappe (63) zum Öffnen oder Verschließen der Einlassöffnung (61) und eine Verschlussklappe (64) zum Öffnen oder Verschließen der Auslassöffnung (62) aufweist.

4. Vorrichtung (1) nach einem der vorhergehenden Ansprüche, **dadurch gekennzeichnet, dass** eine Steuervorrichtung (65) vorgesehen ist, mittels welcher die Betätigung der Verschlussvorrichtung (60), wie insbesondere der zumindest einen Verschlussklappe (63,64), zum Öffnen oder zum Verschließen der Einlassöffnung (61) und/oder der Auslassöffnung (62) steuerbar ist.

5. Vorrichtung (1) nach einem der vorhergehenden Ansprüche, **dadurch gekennzeichnet, dass** die Steuervorrichtung (65) die Einlassöffnung (61) und/oder die Auslassöffnung (62) in einem Stand-by-Betrieb oder bei ausgeschalteter Vorrichtung (1) verschließt.

6. Vorrichtung (1) nach einem der vorhergehenden Ansprüche, **dadurch gekennzeichnet, dass** die Verschlussklappe (63,64) zwischen einer verschlossenen Stellung und einer geöffneten Stellung verlagerbar ist, wie insbesondere verschiebbar, verschwenkbar oder verdrehbar ist, wobei die Einlassöffnung (61) oder die Auslassöffnung (62) in der verschlossenen Stellung der Verschlussklappe (63,64) verschlossen ist und in der geöffneten Stellung der Verschlussklappe (63,64) geöffnet ist.

7. Vorrichtung (1) nach einem der vorhergehenden Ansprüche, **dadurch gekennzeichnet, dass** die Verschlussklappe (63,64) nach dem Typ der Fahnenklappe oder der Schmetterlingsklappe eine Klappenfläche und eine Drehachse aufweist, wobei die Klappenfläche um die Drehachse verschwenkbar ist, wobei die Drehachse in der Ebene der Klappenfläche liegt oder parallel dazu angeordnet ist.

8. Vorrichtung (1) nach einem der vorhergehenden Ansprüche, **dadurch gekennzeichnet, dass** die Verschlussklappe nach dem Typ der Drehklappe eine Klappenfläche und eine Drehachse aufweist, wobei die Klappenfläche um die Drehachse verschwenkbar ist, wobei die Drehachse senkrecht zur Ebene der Klappenfläche angeordnet ist.

9. Vorrichtung (1) nach einem der vorhergehenden Ansprüche, **dadurch gekennzeichnet, dass** die Verschlussklappe (63,64) eine verschiebliche, wie insbesondere linear verschiebliche Klappe ist, welche eine Klappenfläche mit einer Führung aufweist, wobei die Klappenfläche entlang der Führung verschieblich ist.

10. Vorrichtung (1) nach Anspruch 9, **dadurch gekennzeichnet, dass** die Verschlussklappe (63,64) horizontal oder vertikal verschieblich ist.

11. Vorrichtung (1) nach einem der vorhergehenden Ansprüche, **dadurch gekennzeichnet, dass** die Verschlussvorrichtung (60) und/oder die zumindest eine Verschlussklappe (63,64) einen Positionssensor aufweist, mittels welchem der Verschlusszustand der Einlassöffnung (61) und/oder der Auslassöffnung (62) detektierbar ist oder die Position der Verschlussklappe (63,64) der Einlassöffnung (61) und/oder der Auslassöffnung (62) detektierbar ist.

12. Vorrichtung (1) nach einem der vorhergehenden Ansprüche, **dadurch gekennzeichnet, dass** eine Warnvorrichtung (67) vorgesehen ist, mittels welcher ein Fehlersignal ausgebbar ist, falls die Verschlussvorrichtung (60) und/oder die zumindest eine Verschlussklappe (63,64) nicht ordnungsgemäß verschließbar oder verschlossen ist.

13. Vorrichtung insbesondere (1) nach einem der vorhergehenden Ansprüche, **dadurch gekennzeichnet, dass** eine Überwachungsvorrichtung (68) zur Überwachung des Verschmutzungszustands des Materialkanals (7) vorgesehen ist.

14. Vorrichtung (1) nach Anspruch 13, **dadurch gekennzeichnet, dass** die Überwachungsvorrichtung (68) einen Sensor aufweist, welcher Verunreinigungen im Materialkanal (7) detektiert.

15. Vorrichtung (1) nach Anspruch 14, **dadurch gekennzeichnet, dass** der Sensor ein wärmeempfindlicher oder infrarotempfindlicher Sensor ist, welcher eine in dem Materialkanal (7) befindliche erwärmte Verschmutzung erkennt.

16. Vorrichtung (1) nach Anspruch 14 oder 15, **dadurch gekennzeichnet, dass** der Sensor ein rauchempfindlicher Sensor ist, welcher eine Rauchemission einer in dem Materialkanal (7) befindlichen erwärmten Verschmutzung erkennt.

17. Vorrichtung (1) nach Anspruch 14, 15 oder 16, **dadurch gekennzeichnet, dass** der Sensor ein optischer Sensor ist, welcher eine Abschattung in aufgrund einer im Materialkanal (7) befindlichen Verschmutzung erkennt.

18. Vorrichtung (1) nach Anspruch 17, **dadurch gekennzeichnet, dass** zu dem optischen Sensor eine Lichtquelle vorgesehen ist, welche Licht in den Materialkanal (7) emittiert, um eine Verschmutzung durch Abschattung zu erkennen.

19. Vorrichtung (1) nach Anspruch 14, 15, 16, 17 oder 18, **dadurch gekennzeichnet, dass** der Sensor ein mikrowellenempfindlicher Sensor ist, welcher eine Mikrowellenleckage detektiert, welche auf eine Verschmutzung im Materialkanal (7) zurückzuführen ist.

20. Vorrichtung (1) nach einem der vorhergehenden Ansprüche 14 bis 19, **dadurch gekennzeichnet, dass** der Sensor ein Kamerachip ist, welcher Bilddaten von dem Materialkanal (7) erzeugt, die auswertbar sind.

21. Vorrichtung (1) nach einem der vorhergehenden Ansprüche 14 bis 20, **dadurch gekennzeichnet, dass** der Sensor ein Ultraschallsensor ist, mittels welchem eine Verschmutzung im Materialkanal (7) detektierbar ist.

22. Vorrichtung (1) nach einem der vorhergehenden Ansprüche, **dadurch gekennzeichnet, dass** eine Reinigungsvorrichtung vorgesehen ist, welche gesteuert aktivierbar ist, insbesondere welche aktivierbar ist, wenn erkennbar ist, dass im Materialkanal (7) eine Verschmutzung vorliegt.

23. Vorrichtung (1) nach einem der vorhergehenden Ansprüche, **dadurch gekennzeichnet, dass** der Materialkanal (7) durch den zumindest einen Applikator (5,10) und/oder durch das zumindest eine Applikatorsegment verläuft, wobei der Kanal (7) eine Einlassöffnung (61) und eine Auslassöffnung (62) aufweist, welche dazu dienen, das Beschichtungsmaterial (3) in den Materialkanal (7) einzulassen und es wieder auszulassen.

24. Vorrichtung (1) nach Anspruch 23, **dadurch gekennzeichnet, dass** der Materialkanal (7) eine umlaufende Wand aufweist, welche den Materialkanal (7) von dem Innenraum des Applikators (5,10) oder von dem Innenraum des Applikatorsegments trennt.

25. Vorrichtung (1) nach einem der vorhergehenden Ansprüche, **dadurch gekennzeichnet, dass** an der Einlassöffnung (61) und/oder an der Auslassöffnung (62) eine Vorrichtung angeordnet ist, welche einen Austritt von Mikrowellenstrahlung aus der Eintrittsöffnung bzw. aus der Austrittsöffnung reduziert oder verhindert.

## Claims

1. A device (1) for heating a functional layer (2) of a coating material (3) such as a surface coating or an edge band in order to attach the coating material (3) to a surface of a workpiece, with a microwave source (4), an applicator (5, 10) and a microwave channel (6) in order to supply the microwave radiation generated in the microwave source to the applicator (5, 10), wherein a microwave field can be generated in the applicator (5, 10) due to the supplied microwave radiation, wherein the applicator (5, 10) has at least one material channel (7) which crosses the applicator (5, 10) and through which the coating material (3) can be guided, so that the functional layer (2) of the coating material (3) is heated in the microwave field within the applicator (5, 10), wherein the material channel (7) has an inlet opening (61) and an outlet opening (62) for the coating material (3) to be guided through the material channel (7), wherein a closure device (60) is provided by means of which the inlet opening (61) and/or the outlet opening (62) can be closed, wherein a pressing device is provided downstream of the applicator by means of which the coating material is applied to and pressed onto the workpiece.

2. The device (1) according to claim 1, **characterised in that** the closure device (60) has at least one closure flap (63) in order to open or close the inlet opening (61) and/or the outlet opening (62).

3. The device (1) according to claim 1 or 2, **characterised in that** the closure device (60) has a closure flap (63) in order to open or close the inlet opening (61) and a closure flap (64) in order to open or close the outlet opening (62).

4. The device (1) according to one of the preceding claims, **characterised in that** a control device (65) is provided by means of which the actuation of the closure device (60), such as in particular the at least one closure flap (63, 64), in order to open or to close the inlet opening (61) and/or the outlet opening (62) can be controlled.

5. The device (1) according to one of the preceding claims, **characterised in that** the control device (65) closes the inlet opening (61) and/or the outlet opening (62) in a standby operation or when the device (1) is switched off.

6. The device (1) according to one of the preceding claims, **characterised in that** the closure flap (63, 64) is shiftable between a closed position and an opened position, such as in particular slidable, pivotable or twistable, wherein the inlet opening (61) or the outlet opening (62) is closed in the closed position of the closure flap (63, 64) and is opened in the opened position of the closure flap (63, 64).

7. The device (1) according to one of the preceding claims, **characterised in that** the closure flap (63, 64) has a flap surface of the type of a flag flap or a butterfly flap and an axis of rotation, wherein the flap surface is pivotable about the axis of rotation, wherein the axis of rotation lies in the plane of the flap surface or is arranged parallel thereto.

8. The device (1) according to one of the preceding claims, **characterised in that** the closure flap has a flap surface of the type of a rotary flap and an axis of rotation, wherein the flap surface is pivotable about the axis of rotation, wherein the axis of rotation is arranged perpendicular to the plane of the flap surface.

9. The device (1) according to one of the preceding claims, **characterised in that** the closure flap (63, 64) is a slidable, such as in particular linearly slidable flap which has a flap surface with a guidance, wherein the flap surface is slidable along the guidance.

10. The device (1) according to claim 9, **characterised in that** the closure flap (63, 64) is horizontally or vertically slidable.

11. The device (1) according to one of the preceding claims, **characterised in that** the closure device (60) and/or the at least one closure flap (63, 64) has a position sensor by means of which the closure status of the inlet opening (61) and/or the outlet opening (62) can be detected or the position of the closure flap (63, 64) of the inlet opening (61) and/or the outlet opening (62) can be detected.

12. The device (1) according to one of the preceding claims, **characterised in that** a warning device (67) is provided by means of which an error signal can be issued if the closure device (60) and/or the at least one closure flap (63, 64) is not properly closable or closed.

13. The device (1) in particular according to one of the preceding claims, **characterised in that** a monitoring device (68) in order to monitor the state of pollution of the material channel (7) is provided.

14. The device (1) according to claim 13, **characterised in that** the monitoring device (68) has a sensor which detects pollutions in the material channel (7).

15. The device (1) according to claim 14, **characterised in that** the sensor is a heat-sensitive or infrared-sensitive sensor which identifies a heated pollution inside the material channel (7).

16. The device (1) according to claim 14 or 15, **characterised in that** the sensor is a smoke-sensitive sensor which identifies a smoke emission of a heated pollution inside the material channel (7).

17. The device (1) according to claim 14, 15 or 16, **characterised in that** the sensor is an optical sensor which identifies a shading due to a pollution inside the material channel (7).

18. The device (1) according to claim 17, **characterised in that** a light source is provided for the optical sensor which emits light into the material channel (7) in order to identify a pollution through shading.

19. The device (1) according to claim 14, 15, 16, 17 or 18, **characterised in that** the sensor is a microwave-sensitive sensor which detects a microwave leakage which is due to a pollution in the material channel (7) .

20. The device (1) according to one of the preceding claims 14 to 19, **characterised in that** the sensor is a camera chip which creates image data of the material channel (7) which can be analysed.

21. The device (1) according to one of the preceding claims 14 to 20, **characterised in that** the sensor is an ultrasound sensor by means of which a pollution can be detected in the material channel (7).

22. The device (1) according to one of the preceding claims, **characterised in that** a cleaning device is provided which can be controllably activated, which can in particular be activated when it is identified that there is a pollution in the material channel (7) .

23. The device (1) according to one of the preceding claims, **characterised in that** the material channel (7) runs through the at least one applicator (5, 10) and/or through the at least one applicator segment, wherein the channel (7) has an inlet opening (61) and an outlet opening (62) which serve to let the coating material (3) into the and then out of the material channel (7).

24. The device (1) according to claim 23, **characterised in that** the material channel (7) has a circumferential wall which separates the material channel (7) from the interior of the applicator (5, 10) or from the interior of the applicator segment.

25. The device (1) according to one of the preceding claims, **characterised in that** a device is arranged at the inlet opening (61) and/or at the outlet opening (62) which reduces or prevents an outlet of microwave radiation out of the inlet opening or out of the outlet opening.

## Revendications

1. Dispositif (1) servant au chauffage d'une couche fonctionnelle (2) d'un matériau de revêtement (3), telle que celle d'un revêtement de surface ou d'une bande pour les bords, couche fonctionnelle qui sert à l'application du matériau de revêtement (3) sur une surface d'une pièce d'usinage, ledit dispositif comprenant une source de micro-ondes (4), un applicateur (5, 10) et un canal à micro-ondes (6) servant à fournir, à l'applicateur (5, 10), le rayonnement micro-onde produit dans la source de micro-ondes, où un champ à micro-ondes peut être produit dans l'applicateur (5, 10) en raison du rayonnement micro-onde fourni, où l'applicateur (5, 10) présente au moins un canal de matériau (7) qui traverse l'applicateur (5, 10) et par lequel le matériau de revêtement (3) peut être mis en oeuvre, de sorte que la couche fonctionnelle (2) du matériau de revêtement (3) est chauffée, dans le champ à micro-ondes, à l'intérieur de l'applicateur (5, 10), où le canal de matériau (7) présente une ouverture d'entrée (61) et une ouverture de sortie (62) pour le matériau de revêtement (3) devant être mis en oeuvre en traversant le canal de matériau (7), où il est prévu un dispositif de fermeture (60) au moyen duquel l'ouverture d'entrée (61) et / ou l'ouverture de sortie (62) peut être fermée, où un dispositif de pression est disposé en aval de l'applicateur, dispositif de pression à l'aide duquel le matériau de revêtement est appliqué et pressé sur la pièce d'usinage.

2. Dispositif (1) selon la revendication 1, **caractérisé en ce que** le dispositif de fermeture (60) présente au moins un volet de fermeture (63) servant à l'ouverture ou à la fermeture de l'ouverture d'entrée (61) et / ou de l'ouverture de sortie (62).

3. Dispositif (1) selon la revendication 1 ou 2, **caractérisé en ce que** le dispositif de fermeture (60) présente un volet de fermeture (63) servant à l'ouverture ou à la fermeture de l'ouverture d'entrée (61), et présente un volet de fermeture (64) servant à l'ouverture ou à la fermeture de l'ouverture de sortie (62).

4. Dispositif (1) selon l'une quelconque des revendications précédentes, **caractérisé en ce qu'**il est prévu un dispositif de commande (65) au moyen duquel peut être commandé l'actionnement du dispositif de fermeture (60), comme en particulier du volet de fermeture (63, 64) au moins au nombre de un, ledit actionnement servant à l'ouverture ou à la fermeture de l'ouverture d'entrée (61) et / ou de l'ouverture de sortie (62).

5. Dispositif (1) selon l'une quelconque des revendications précédentes, **caractérisé en ce que** le dispositif de commande (65) ferme l'ouverture d'entrée (61) et / ou l'ouverture de sortie (62) au cours d'un fonctionnement en mode attente, ou bien quand le dispositif (1) est arrêté.

6. Dispositif (1) selon l'une quelconque des revendications précédentes, **caractérisé en ce que** le volet de fermeture (63, 64) peut être déplacé entre une position fermée et une position ouverte, pouvant en particulier être déplacé, basculé ou tourné, où l'ouverture d'entrée (61) ou l'ouverture de sortie (62) est fermée dans la position fermée du volet de fermeture (63, 64) et est ouverte dans la position ouverte du volet de fermeture (63, 64).

7. Dispositif (1) selon l'une quelconque des revendications précédente, **caractérisé en ce que** le volet de fermeture (63, 64) présente, selon le type du volet drapeau ou du volet papillon, une surface de volet et un axe de rotation, où la surface de volet peut pivoter autour de l'axe de rotation, où l'axe de rotation se situe dans le plan de la surface de volet ou bien est disposé en étant parallèle audit plan.

8. Dispositif (1) selon l'une quelconque des revendications précédentes, **caractérisé en ce que** le volet de fermeture présente, selon le type du volet rotatif, une surface de volet et un axe de rotation, où la surface de volet peut pivoter autour de l'axe de rotation, où l'axe de rotation est disposé en étant perpendiculaire au plan de la surface de volet.

9. Dispositif (1) selon l'une quelconque des revendications précédentes, **caractérisé en ce que** le volet de fermeture (63, 64) est un volet mobile, comme étant en particulier un volet mobile de façon linéaire, volet qui présente une surface de volet ayant un guidage, où la surface de volet est mobile le long du guidage.

10. Dispositif (1) selon la revendication 9, **caractérisé en ce que** le volet de fermeture (63, 64) est mobile horizontalement ou verticalement.

11. Dispositif (1) selon l'une quelconque des revendications précédentes, **caractérisé en ce que** le dispositif de fermeture (60) et / ou le volet de fermeture (63, 64) au moins au nombre de un présente un détecteur de position au moyen duquel peut être détecté l'état de fermeture de l'ouverture d'entrée (61) et / ou de l'ouverture de sortie (62), ou bien peut être détectée la position du volet de fermeture (63, 64) de l'ouverture d'entrée (61) et / ou de l'ouverture de sortie (62).

12. Dispositif (1) selon l'une quelconque des revendications précédentes, **caractérisé en ce qu'**il est prévu un dispositif avertisseur (67) au moyen duquel peut être émis un signal de défaut, au cas où le dispositif de fermeture (60) et / ou le volet de fermeture (63, 64) au moins au nombre de un peut être fermé ou est fermé de façon non correcte.

13. Dispositif (1), en particulier selon l'une quelconque des revendications précédentes, **caractérisé en ce qu'**il est prévu un dispositif de surveillance (68) servant à la surveillance de l'état d'encrassement du canal de matériau (7).

14. Dispositif (1) selon la revendication 13, **caractérisé en ce que** le dispositif de surveillance (68) présente un capteur qui détecte des impuretés dans le canal de matériau (7).

15. Dispositif (1) selon la revendication 14, **caractérisé en ce que** le capteur est un capteur thermosensible ou sensible aux infrarouges, capteur qui détecte un encrassement chauffé se produisant dans le canal de matériau (7).

16. Dispositif (1) selon la revendication 14 ou 15, **caractérisé en ce que** le capteur est un capteur sensible à la fumée, capteur qui détecte une émission de fumée d'un encrassement chauffé se produisant dans le canal de matériau (7).

17. Dispositif (1) selon la revendication 14, 15 ou 16, **caractérisé en ce que** le capteur est un capteur optique qui détecte un effet d'ombrage à cause d'un encrassement se produisant dans le canal de matériau (7).

18. Dispositif (1) selon la revendication 17, **caractérisé en ce qu'**il est prévu une source de lumière par rapport au capteur optique, laquelle source de lumière émet de la lumière dans le canal de matériau (7), pour détecter un encrassement par effet d'ombrage.

19. Dispositif (1) selon la revendication 14, 15, 16, 17 ou 18, **caractérisé en ce que** le capteur est un capteur sensible aux micro-ondes, capteur qui détecte une fuite de micro-ondes qui est à imputer à un encrassement se produisant dans le canal de matériau (7).

20. Dispositif (1) selon l'une quelconque des revendications précédentes 14 à 19, **caractérisé en ce que** le capteur est une puce de caméra qui produit des données d'images provenant du canal de matériau (7), données d'images qui sont exploitables.

21. Dispositif (1) selon l'une quelconque des revendications précédentes 14 à 20, **caractérisé en ce que** le capteur est un capteur à ultrasons au moyen duquel peut être détecté un encrassement se produisant dans le canal de matériau (7).

22. Dispositif (1) selon l'une quelconque des revendications précédentes, **caractérisé en ce qu'**il est prévu un dispositif de nettoyage qui peut être activé par une commande, qui peut être activé en particulier quand il a été détecté qu'un encrassement s'est produit dans le canal de matériau (7).

23. Dispositif (1) selon l'une quelconque des revendications précédentes, **caractérisé en ce que** le canal de matériau (7) s'étend à travers l'applicateur (5, 10) au moins au nombre de un et / ou à travers le segment d'applicateur au moins au nombre de un, où le canal (7) présente une ouverture d'entrée (61) et une ouverture de sortie (62) qui servent à faire entrer le matériau de revêtement (3) dans le canal de matériau (7) et à le faire à nouveau sortir dudit canal.

24. Dispositif (1) selon la revendication 23, **caractérisé en ce que** le canal de matériau (7) présente une paroi périphérique qui sépare le canal de matériau (7), de l'espace intérieur de l'applicateur (5, 10), ou bien de l'espace intérieur du segment de l'applicateur.

25. Dispositif (1) selon l'une quelconque des revendications précédentes, **caractérisé en ce qu'**un dispositif est agencé sur l'ouverture d'entrée (61) et / ou sur l'ouverture de sortie (62), dispositif qui réduit ou empêche une sortie de rayonnement micro-onde se produisant depuis l'ouverture d'entrée ou depuis l'ouverture de sortie.
